# EUROPÄISCHE PATENTSCHRIFT

(11) **EP 1 102 664 B1**
(45) Veröffentlichungstag und Bekanntmachung des Hinweises auf die Patenterteilung: **16.11.2005**
(21) Anmeldenummer: 00945570.0
(22) Anmeldetag: 26.05.2000
(51) Int. Cl.: B27B 19/12, B23D 51/14, B23D 51/01

(54) **HANDGEFÜHRTE LAUBSÄGEMASCHINE**
HAND-GUIDED JIG SAW MACHINE
SCIE A DECOUPER GUIDEE A LA MAIN

(30) Priorität: 05.06.1999 DE 19925750
(43) Veröffentlichungstag der Anmeldung: 30.05.2001
(73) Patentinhaber: ROBERT BOSCH GMBH, 70442 Stuttgart (DE)
(72) Erfinder: FRECH, Alfred, D-70771 Leinfelden-Echterdingen (DE); WIKER, Juergen, D-70771 Leinfelden-Echterdingen (DE); ENGELFRIED, Uwe, D-73760 Ostfildern (DE); KEUSCH, Siegfried, D-73779 Deizisau (DE)
(86) Internationale Anmeldenummer: PCT/DE2000/001720
(87) Internationale Veröffentlichungsnummer: WO 2000/074907

(56) Entgegenhaltungen:
- CH-A- 200 742
- US-A- 2 233 862
- US-A- 5 027 518
- US-A- 5 176 059
- US-A- 5 351 590
- US-A- 5 870 829

## Beschreibung

### Stand der Technik

Die vorliegende Erfindung geht aus von einer handgeführten Laubsägemaschine nach dem Oberbegriff des Anspruchs 1.

Durch die US 5,027,518 ist eine gattungsgemäße Laubsägemaschine bekannt, die einer manuell zu betätigenden Laubsäge ähnelt. Dabei trägt der typische U-förmige Bügel einen nach unten quer abstehenden Handgriff sowie ein Motorgehäuse, wobei die Rückseite des Handgriffs eine Schalttaste zur Steuerung der Energieversorgung des Motors trägt.

Zwischen den durch den Bügel gebildeten, parallelen Armen ist ein Laubsägeblatt gespannt, das mittels eines am unteren Arm angeordneten batteriegetriebenen Motors oszillierend antreibbar ist. Gegenüber manuellen Laubsägen hat die bekannte Maschine den Vorteil, daß die Sägebewegung von Hand entfällt, aber die Anordnung des Motors quer zur Armachse macht die Laubsägemaschine sperrig und im Bereich des Werkzeugeingriffs unübersichtlich. Außerdem sind die zwischen dem Laubsägeblatt und dem Motor angeordneten Getriebe- bzw. Führungsmittel verhältnismäßig aufwendig gestaltet.

### Vorteile der Erfindung

Die Aufgabe der Erfindung wird durch die Merkmale des unabhängigen Anspruchs 1 gelöst.

Die abhängigen Ansprüche offenbaren weitere Vorteile der Erfindung.

Die handgeführte Laubsägemaschine mit den Merkmalen des Anspruchs 1 hat den Vorteil, daß sie ein besonders leichtes und robustes Antriebs- und Bewegungsübertragungssystem zum Auf- und Abbewegen des Laubsägeblattes besitzt, sehr leicht ist, bequem in der Hand liegt und sicher kontrollierbar vom Bedienenden zu führen ist.

Die besondere Handhabungssicherheit ergib sich dadurch, daß das pistolenartige Basisgehäuse an den Handgriff anschließend nach hinten verlängert ist, um sich in der Bedienposition am Unterarm des Bedienenden abzustützen.

Dadurch, daß die Arme des U-förmigen Bügels um ein Mehrfaches, insbesondere um das Doppelte, länger sind als das Laubsägeblatt, können verhältnismäßig großflächige Werkstükke bis in ihre Mitte mit der Laubsäge bearbeitet werden, d.h. die maximale Schnittiefe in ein brettartiges Werkstück von dessen Rand aus ist mit ca. 270 mm verhältnismäßig hoch.

Dadurch, daß der Handgriff die Schalttaste des Ein- und Ausschalters des Motors vorn trägt, ist diese Schalttaste besonders leicht zugänglich, insbesondere mit dem Zeigefinger, wobei sie durch gehäusefeste Vorsprünge eingefaßt und dadurch deren ungewolltes Betätigen erschwert ist.

Dadurch, daß das Basisgehäuse am unteren Arm des Bügels den Motor und Antriebsmittel zum Hin- und Herbewegen des Laubsägeblattes aufnimmt und dadurch, daß ein Endgehäuse am oberen Arm des Bügels das Spann- und Antriebsmittel des Laubsägeblatts aufnimmt, sind die bewegten Teile kompakt und staubsicher gegen Beschädigung von außen gesichert, während damit gleichzeitig der Bedienende gegen Verletzungen an den bewegten Teilen der Laubsägemaschine geschützt ist, wobei durch die Spannmittel zum lösbaren Haltern des Sägeblatts das parallelogrammartige Getriebe an der oberen Blattfeder von oben bequem und kontrolliert in die Löse- oder Spannposition bringbar ist.

Dadurch, daß die Laubsägemaschine an ihrem Basisgehäuse oben eine mit Rillen strukturierte, zum unteren Arm fluchtende ebene Auflagefläche zum Abstützen eines Werkstücks trägt, ist die Laubsägemaschine gegenüber dem Werkstück besonders kontrolliert und vibrationsfrei führbar, so daß Sägeschnitte nahezu so sauber wie mit dem Lineal bzw. dem Zirkel ausführbar sind.

Dadurch, daß das Basisgehäuse der Laubsägemaschine lösbar, insbesondere verrastbar, mit einem z.B. an einer Werkbank befestigbaren Sägetisch koppelbar ist, wobei der Handgriff den Sägetisch nach unten bequem greifbar überragt, kann die Laubsäge mit dem daran befestigten Sägetisch gemeinsam als besonders genau positionierbares Handwerkzeug eingesetzt werden bzw. bei an eine Werkbank angeflanschtem Sägetisch als stationäres Gerät genutzt werden.

Dadurch, daß die Laubsägemaschine einen parallel zum Laubsägeblatt verschiebbaren Werkstückniederhalter trägt, der zugleich als Fingerabweiser dient, ist das zu bearbeitende Werkstück gegenüber der Laubsägemaschine besonders gut kontrolliert festlegbar, so daß präzise Sägeschnitte geführt werden können.

Dadurch, daß die Arme des U-förmigen Bügels flache freie Enden aufweisen und daran je eine vollflächig aufliegende Blattfeder tragen, sind diese lagesicher und biegesteif mit dem Bügel verbunden und präzise parallel und fluchtend zueinander ausrichtbar, so daß ein vibrationsfreien Führen des Sägeblatts gesichert ist.

Dadurch, daß die Blattfedern an ihren freien Enden einen mittigen Gabelschlitz tragen, in den je ein Einspannende des Laubsägeblatts lösbar einhängbar ist, ist eine einfach herstellbare, werkzeuglos formschlüssig spannbare Halterung des Laubsägeblatts geschaffen, die robust und sicherer ist als bisher bekannte Klemmhalterungen, z.B. mittels Flügelmutter, von Laubsägeblättern.

Dadurch, daß die obere Blattfeder U-förmig gebogen und mit ihrem unteren Schenkel so am freien Ende des Armes des U-förmigen Profils befestigt ist, insbesondere genietet, daß mindestens einer der Schenkel gleichsinnig mit dem freien Arm nach außen weisen, wobei die Wölbung und der obere U-Schenkel frei schwenkbar sind, ist besonders kostengünstig eine elastisch vorgespannte Schwinge für ein parallelogrammartiges Getriebe geschaffen, deren Gegenschwinge die am unteren Arm befestigte Blattfeder bildet, für die das Sägeblatt die Koppel ist und das dem Sägeblatt neben der Auf-und Abbewegung einen Pendelhub erteilt.

Die obere Blattfeder bewirkt infolge ihrer Geometrie sowohl die Vorspannung als auch den Aufwärtshub (Leerhub) des Laubsägeblatts, während die untere Blattfeder gemeinsam mit dem Sägeblatt und der oberen Blattfeder beim Arbeitshub vom Motor nach unten gezogen wird. Dabei wird die obere Blattfeder für den Leerhub gespannt.

Dadurch, daß der U-förmige Bügel aus Metall besteht, insbesondere aus Rohr mit kreisrundem oder elliptischem Querschnitt, und daß das Basis- und Endgehäuse aus Kunststoff, insbesondere aus hälftig zusammensetzbaren Gehäuseschalen, bestehen, ist die Laubsägemaschine leicht, handlich und robust, wobei das Sägeblatt präzise und spielfrei geführt ist.

Dadurch, daß der Motor ein Gleichstrommotor ist, der ein gesondertes Motorgehäuse hat, das einen Rotor mit Motorwelle, deren Lager sowie einen aus Permanentmagneten bestehenden Stator aufnimmt, dem zum Betreiben mit Netzspannung ein elektronischer Gleichrichter vorgeschaltet ist, kann das Basisgehäuse der Laubsägemaschine besonders grob toleriert hergestellt werden, wobei dennoch Qualität, Arbeitsgenauigkeit und Lebensdauer der Laubsägemaschine hoch sind.

Dadurch, daß der Motor mittels Gummiringen im Gehäuse elastisch lagerbar ist, werden die Motorschwingungen gedämpft und deren Übertragung auf das Sägeblatt bzw. auf die gesamte Laubsägemaschine vermieden, so daß besonders vibrationsarm, präzise und geradlinige gesägt werden kann.

Dadurch, daß eine vom unteren Arm getragene Blattfeder mit ihrem freien Ende als auf- und abschwenkbares Widerlager des Sägeblatts dient und dieses schwenkbar führt, wobei die Sägeblatt-Einspannstelle an der Blattfeder von der Koppelstelle der Blattfeder mit dem Pleul beabstandet ist, ist ein grob tolerierbares und dennoch präzise funktionierendes Bewegungsübertragungssystem vom Antriebsmotor zum Laubsägeblatt geschaffen, so daß die Bewegungsumkehr des Sägeblatts gedämpft ist und zum vibrationsarmen Betrieb der Laubsägemaschine beiträgt. Dabei ist das Pleul nur auf Zug beansprucht und dementprechend leicht dimensionierbar und aus Draht - mit spiraligem Pleulauge - herstellbar.

Dadurch, daß eine Kurbelwelle im Gehäuse gelagert ist, die an einem freien Ende einen Kurbelzapfen trägt, der über ein Pleul durch Eingriff in dessen Pleulauge mit der unteren Blattfeder koppelbar ist, ist ein einfaches, robustes und präzises Antriebssystem für das Laubsägeblatt geschaffen.

Dadurch, daß das Pleuel am Kurbelzapfen mit einem Pleuel, insbesondere über ein Nadellager, drehbar gelagert ist, sind die Reibungsverluste bei der Bewegungsübertragung gering.

Dadurch, daß der obere Arm an seinem freien Ende, insbesondere in einem Endgehäuse eine Blattfeder trägt, die als oberes Widerlager zum Festhalten des anderen Endes des Laubsägeblattes dient, wird durch die obere und untere Blattfeder gemeinsam mit dem Laubsägeblatt ein parallelogrammartiges Getriebe (Viergelenk) gebildet, in dem die Blattfedern als Schwingen und das Laubsägeblatt als Koppel dienen. Dieses Führungs- und Bewegungssystem des Laubsägeblattes ist einfach und robust und erteilt dem Laubsägeblatt zusätzlich zur Längsbewegung eine geringfügige, oszillierende, pendelhubartige Querbewegung in Vorschubrichtung.

Dadurch, daß die untere Blattfeder an ihrem freien Ende eine, insbesondere gestanzte, nach unten gewölbte Lasche aufweist, die eine Öse zum Eingriff des Pleuels bildet, insbesondere mit seinem als Haken ausgestalteten dem Pleuelauge gegenüberliegenden Ende, ist die untere Blattfeder besonders einfach mit dem Motor koppelbar.

Dadurch, daß die Blattfedern an ihren freien Enden je eine zum Schlitz quer verlaufende Rinne aufweisen, in der ein als Nippel ausgestaltetes Einspannende des Sägeblatts, insbesondere mit seiner Schneide - selbstzentrierend ein Schwenkgelenk bildend - abstützbar ist, wird das Laubsägeblatt während des Antriebes nur mit Längskräften und nicht auf Biegung beansprucht. Damit ist die Lebensdauer des Laubsägeblattes deutlich besser als bei herkömmlichen manuellen Laubsägen.

Dadurch, daß das Basisgehäuse pistolenartig ausgestaltet ist, von dem der Handgriff schräg nach hinten weisend quer absteht, und in seinem winkligen Übergang in das Basisgehäuse an seiner hinteren Kontur eine gekrümmt abgewinkelte Kehle bildet, die sich in Bedienposition in die Hand des Bedienenden schmiegt und sich dabei horizontal und vertikal darin abstützt, wobei der untere Arm des U-förmigen Bügels hinten aus dem Gehäuse tritt, ist die Laubsäge sozusagen in die Hand gebaut und besonders sicher und kontrollierbar zu führen.

Dadurch, daß das Laubsägeblatt an seinen beiden Einspannenden je eine Verdickung aufweist, insbesondere Nippel, mit denen sie sich in den Gabelschlitzen der Blattfedern festhalten, sind diese zwischen oberer und unterer Schwinge gelenkig und biegespannungsfrei gelagert. Damit erhöht sich die Lebensdauer des Laubsägeblatts gegenüber denen von herkömmlichen Laubsägen.

### Zeichnung

Die Erfindung ist nachstehend an Hand eines Ausführungsbeispiels mit zugehöriger Zeichnung erläutert.

Es zeigen
Fig. 1 eine räumliche Ansicht der erfindungsgemäßen handgeführten Laubsägemaschine von vorn links,
Fig. 2 die mit einem Sägetisch verrastete Laubsägemaschine gemäß Figur 1 von vorn rechts,

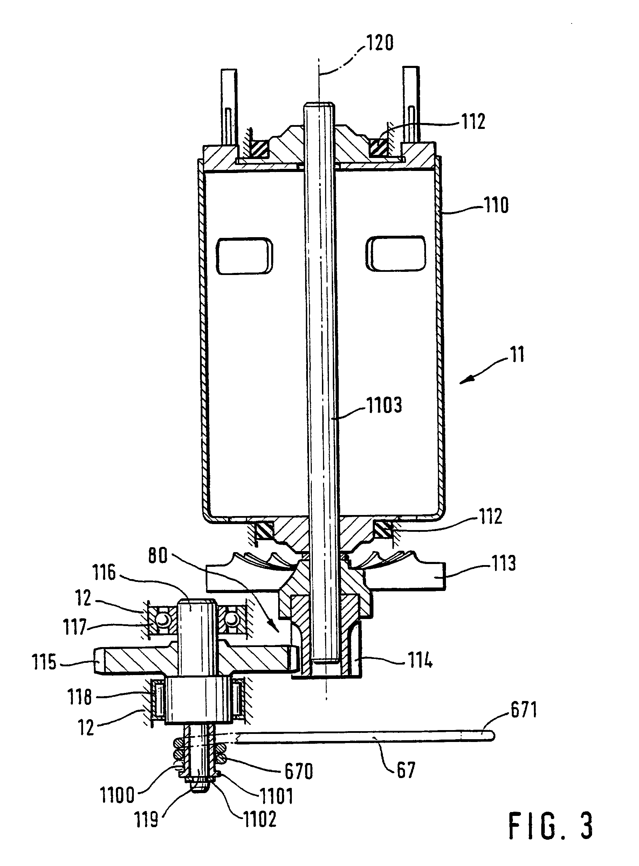

Fig. 3 einen Längsschnitt des Motors mit dem Kurbelgetriebe und Pleuel,
Fig. 4 eine vergrößerte räumliche Darstellung des Abtriebsritzels mit Kurbelwelle, Pleuel und unterer Blattfeder,
Fig. 5 das Pleuel als Einzelheit,
Fig. 6 den U-förmigen Bügel mit oberer und unterer Blattfeder seitlich von hinten betrachtet,
Fig. 7 die untere Blattfeder mit eingehängtem Laubsägeblatt Fig. 8 den U-förmigen Bügel mit Endgehäuse,
die Fig. 9, 10 die obere Blattfeder als trapezförmiges Ausführungsbeispiel,
Fig. 11 das Laubsägeblatt als Einzelheit und
Fig. 12 die linke Halbschale des Basisgehäuses mit montiertem Motor und Getriebe.

### Ausführungsbeispiel

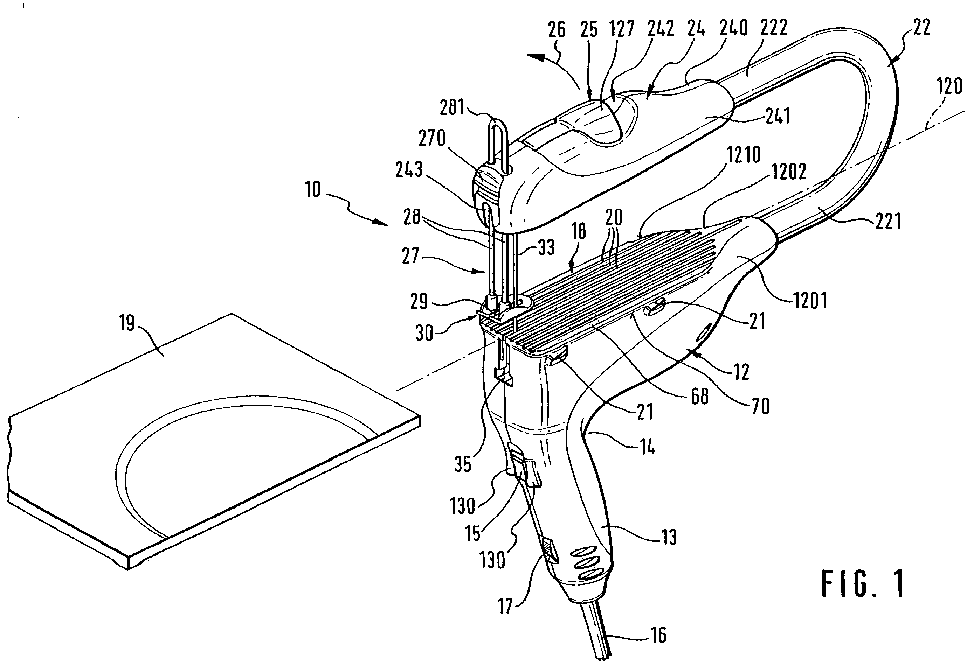

Die in Figur 1 gezeigte Laubsägemaschine 10 besteht aus einem pistolenartigen unteren Basisgehäuse 12 mit einem quer nach unten abstehenden nach hinten abgewinkelten Handgriff 13. Die hintere Kontur des Handgriffs 13 bildet im Austrittsbereich aus dem Basisgehäuse 12 eine konkav gewölbte Kehle 14, die waagerecht nach hinten als untere Außenkontur des Basisgehäuses 12 weitergeführt ist. Die Kehle 14 schmiegt sich in die Bedienhand und liegt dabei etwa mittig zwischen Daumen und Zeigefinger auf dieser bzw. in diese eingespannt. Dabei stützt sich der waagerecht verlaufende hintere Bereich des Basisgehäuses 12 auf dem Handrücken und dem Unterarm des Bedienenden und bildet einen verlängerten Stützhebel, so daß dadurch die Laubsäge 10 beim Sägen besonders sicher kontrolliert handhabbar ist.

Der Handgriff 13 trägt vorn eine von aus dem Handgriff 13 tretenden, nasenartigen Vorsprüngen 130 seitlich eng umrahmte Schalttaste 15 zum Unterbrechen bzw. Schließen des Stromkreises. Unten aus dem Handgriff 13 tritt ein Netzanschlußkabel 16 zur Energieversorgung des im Inneren des Basisgehäuses 12 angeordneten, nicht dargestellten Motors.

Unterhalb der Schalttaste 15 ist am Handgriff 13 ein Stellrad 17 einer nicht dargestellten Regelelektronik zur Drehzahleinstellung des Motors angeordnet.

Das Basisgehäuse 12 besteht aus zwei längsgeteilten Halbschalen 1201, 1202 und trägt oben eine planebene, schiffsdeckartige Auflagefläche 18 mit Längsrillen 20, auf der ein Werkstück 19 zur Bearbeitung abstützbar ist.

Das Basisgehäuse 12 trägt auf beiden Seiten unterhalb eines umlaufenden Außenrandes 68 je zwei von einander beabstandete Spannclips 21, von denen nur die beiden auf der linken Seite angeordneten erkennbar sind.

Aus dem Basisgehäuse 12 tritt nach hinten ein unterer Arm 221 eines U-förmigen Bügels 22 aus, der aus gebogenem Rohr besteht und von den Halbschalen 1201, 1202 dicht umgriffen wird. Der untere Arm 221 geht bogenförmig nach oben vorn in einen parallel zum unteren Arm 221 verlaufenden oberen Arm 222 über. Dieser obere Arm 222 trägt an seinem nach vorn gerichteten freien Ende ein Endgehäuse 24, das am Arm 222 über Befestigungsschrauben fixierbar ist und das aus zwei längsgeteilten Gehäuseschalen 240, 241 besteht. Das Endgehäuse 24 trägt einen von oben zugänglichen Spannhebel 25, dessen Griff 127 durch eine mulden- oder kerbenartige Vertiefung 242 mit dem Finger der Bedienhand untergreifbar ist und nach oben zum Öffnen in Richtung des Betätigungspfeils 26 verschwenkbar ist.

An seinem abgerundeten Frontende trägt das Endgehäuse 24 einen Werkstückniederhalter 27, der aus zwei runden Gleitstangen 28 besteht, die im Endgehäuse 24 gegenüber dem unteren Gehäuse 12 arretierbar verschieblich gelagert sind. Die beiden Gleitstangen 28 ragen oben über das Endgehäuse 24 hinaus und sind dort durch einen U-förmigen Bogen 281 miteinander verbunden. Die Gleitstangen 28 tragen an ihrem unteren freien Ende - der Auflagefläche 18 zugewandt - einen fußartigen Anschlag 30. Dieser erstreckt sich parallel zur Auflagefläche 18 hufeisenförmig nach hinten und hat einen nach vorn offenen Schlitz 29. Darin ist ein Laubsägeblatt 33 seitlich und von hinten geführt bzw. gegen zu weites seitliches oder nach hinten gerichtetes Auslenken gesichert.

Der Werkstückniederhalter 27 ist nach Niederdrücken seiner frontal aus dem Endegehäuses ragenden Drucktaste 270 aus seiner Arretierposition nach oben verschiebbar.

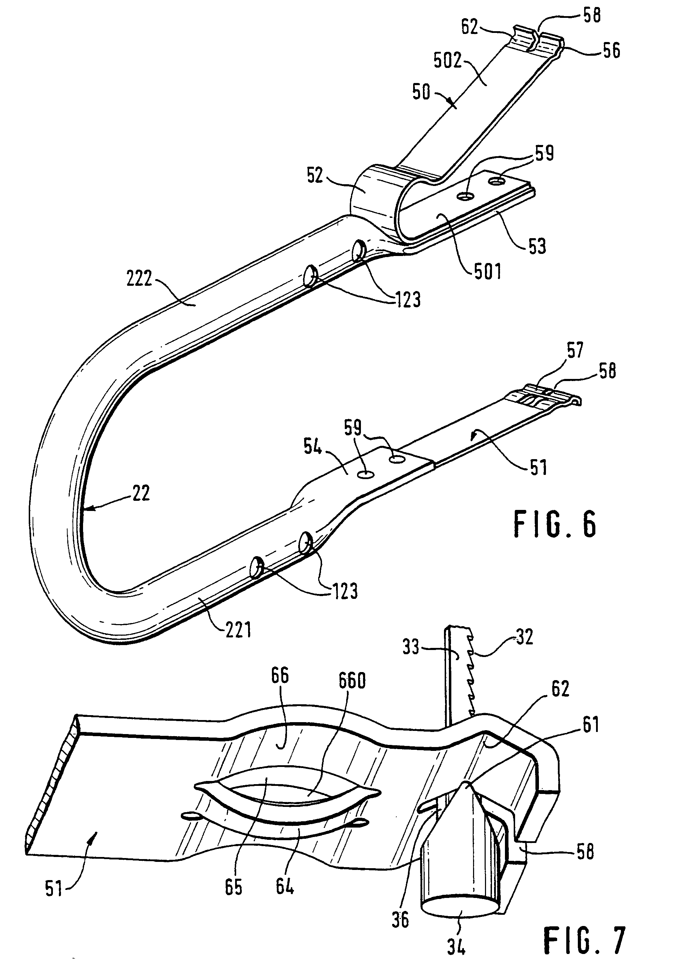

Das Laubsägeblatt 33 hat zwei Einspannenden mit je einem nicht dargestellten Nippel aus Kunstoff, der den Durchmesser des Sägeblatts 33 an dessen Einspannenden deutlich vergrößert, so daß diese in gabelartigen Widerlagern 56, 57 einhängbar (Fig. 6, 7) und damit spannbar sind.

Das Endgehäuse 24 weist an seinem Frontbereich unterhalb der Drucktaste 270 ein schlitzartiges Montagefenster 243 auf, durch das hindurch das als Nippel ausgestaltete Einspannende des Sägeblatts 33 in sein oberes Widerlager 56 einhängbar ist. Dazu korrespondierend weist das Basisgehäuse 12 einen frontalen Montageschlitz 35 auf, durch den das untere Einspannende des Laubsägeblatts 33 in Gestalt eines zweiten Nippels einhängbar ist.

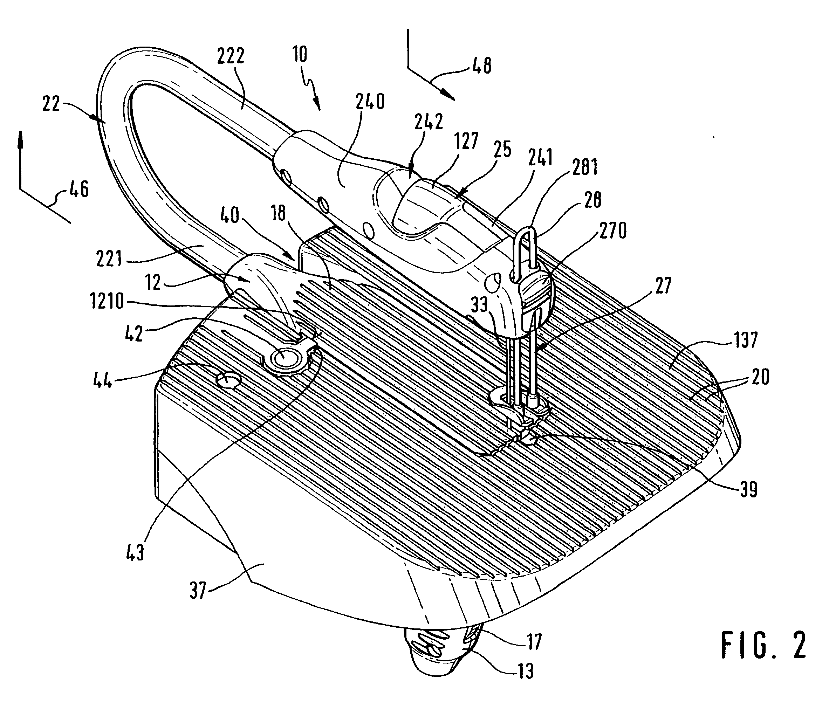

Fig. 2 zeigt die Laubsägemaschine 10 von rechts oben mit einem Sägetisch 37 gekuppelt, dessen obere, planebene Auflagefläche 137 bündig in die Auflagefläche 18 des Basisgehäuses 12 übergeht, wobei die Rillen 20 der Auflageflächen 137, 18 regelmäßig ineinander übergehen.

Der Sägetisch 37 hat vorn einen nach unten austretenden nicht dargestellten Absaugstutzen, der oben im Bereich der Auflagefläche 137 in ein Absaugloch 39 mündet, durch das hindurch beim Sägen gebildete Sägespäne absaugbar sind, wenn an den Absaugstutzen ein Saugschlauch eines Staubsaugers oder dgl. angeschlossen ist.

Der Sägetisch 37 trägt mittig in seinem hinteren Bereich eine im Grundriß U-förmige, in die Auflagefläche 137 hineinführende, nach unten durchgehende Ausnehmung 40, die der Außenkontur bzw. dem Außenrand 68 der Auflagefläche 18 des Basisgehäuses 12 entspricht. Die Ausnehmung 40 trägt oben auf gegenüberliegenden Seiten nicht dargestellte Längsführungen, die ein bajonettverschlußartiges Einklinken des Basisgehäuses 12 der Laubsägemaschine 10 in den Sägetisch 37 sowie dessen spielfreie Halterung darin ermöglichen.

Eine Arretiertaste 42 bildet einen Rastanschlag 43, der in eine korrespondierende Aussparung 1210 des Basisgehäuses 12 nahe der Auflagefläche 18 eingreift und das Basisgehäuse 12 und damit die Laubsägemaschine 10 gegenüber dem Sägetisch 37 lösbar festhält.

Die Auflagefläche 137 des Sägetischs 37 wird senkrecht nach unten von nach außen gleichmäßig beabstandenden Schraubenlöchern 44 durchtreten, durch die hindurch Schrauben steckbar sind, mit denen der Sägetisch 37 an einer festen Unterlage, beispielsweise Werkbank oder dgl. verschraubbar ist. Außerdem weist der Sägetisch 37 an seinem äußeren Rand hinten - nicht dagestellte - Klemmöffnungen auf zum Eintritt einer Spannbacke einer nicht dargestellten Schraubzwinge, mit der er an einer festen Unterlage befestigbar ist.

Der Handgriff 13 ragt unterhalb des Sägetischs 37 hervor, so daß die Laubsägemaschine 10 mit gehaltertem Sägetisch 37 gemeinsam als Handwerkzeug einsetzbar ist. Damit ist die Laubsägemaschine 10 gegenüber Werkstücken besonders bequem so ausrichtbar, daß diese rechtwinklig gegenüber dem Sägeblatt 33 bzw. der Auflagefläche 18, 137 positioniert sind.

Die Laubsägemaschine 10 gemäß Fig. 1 wird von einem netzbetriebenen Gleichstrommotor, dem Motor 11 angetrieben. Dessen Netzspannung wird über eine nicht dargestellte als Vollwellengleichrichter ausgestaltete Elektronik gleichgerichtet. Die Innenaufnahmeleistung des Motors beträgt ca. 70 Watt, die Leerlaufdrehzahl ca. 3000 Umdrehungen/Min.

Der Motor 11 besitzt einen Stator, der nicht von durch Strom durchflossenen Leitern, sondern von einem Permanentmagnet gebildet wird. Dadurch werden Abmessungen und Masse des Motors gering gehalten.

Die Ankerlagerung des Motors ist nicht dargestellt und im Motorgehäuse 110 so integriert, daß Lager für die Motorwelle 1103 im Basisgehäuse 12 entfallen können.

Der Motor 11 ist als vollständige Baugruppe in eine der Gehäuseschalen 1201, 1202 des Basisgehäuses 12 einlegbar und über Gummiringe 112 zwischen den Halbschalen 1201,1202 des Basisgehäuses 12 festgelegt. Auf der aus dem Motorgehäuse 110 tretenden Motorwelle 1103 ist ein Lüfter 113 und ein Motorritzel 114 gelagert. Die Gummiringe 112 bilden zwischen den fest miteinander verschraubbaren Halbschalen 1201, 1202 des Basisgehäuses 12 Lagerpunkte 111, die Schwingungen des Motors bzw. des Getriebes auf das Basisgehäuse 12 dämpfen.

Zwischen den Halbschalen 1201,1202 des Basisgehäuses 12 ist eine Kurbelwelle 116 an zwei voneinander beabstandeten Lagerstellen in einem Kugellager 117 und einem Nadellager 118 drehbar gelagert. Ein die Kurbelwelle 116 drehfest umgreifendes Getrieberitzel 115 kämmt mit dem Motorritzel 114 und überträgt so die Drehung der Motorwelle 1103 auf die Kurbelwelle 116.

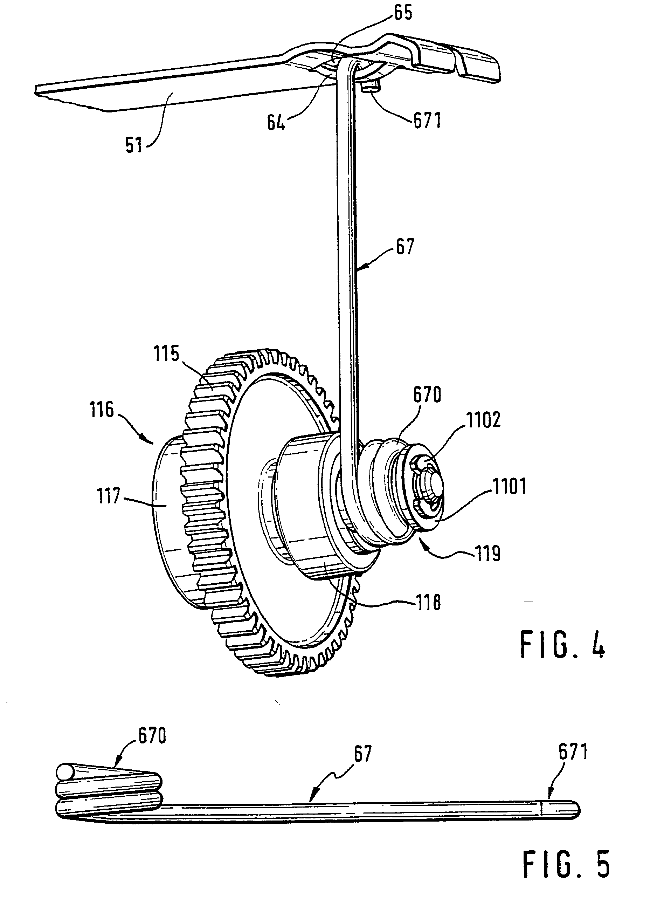

Die Kurbelwelle 116 trägt auf ihrem freien, dem Motor 11 abgewandten Ende einen Kurbelzapfen 119, an dem ein aus Runddraht bestehendes Pleul 67 mit seinem aus Runddraht, insbesondere Federstahldraht, spiralig gedrehten Pleulauge 670 im Pleuellager 1100 drehbar nadelgelagert ist. Das Pleuel 67 ist gegenüber dem Kurbelzapfen 119 durch eine Anlaufscheibe 1101 und einen Klemmring 1102 axial gesichert. Das dem Pleuelauge 670 abgewandte Ende des Pleuels 67 ist als Haken 671 ausgestaltet. Der Haken 671 greift formschlüssig am freien Ende der unteren Blattfeder 51 in eine durch eine ausgestanzte Lasche 64 gebildete Öse 65 ein und ist darin gelenkig gelagert (Fig. 4).

Die Fig. 4 zeigt eine räumliche Darstellung der Kurbelwelle 116 mit dem Getrieberitzel 115 und den Lagern 117, 118 sowie dem Kurbelzapfen 119 und den zuvor genannten Sicherungsmitteln, ohne diese nochmals zu wiederholen. Das Getrieberitzel 115 auf der Kurbelwelle 116 besteht aus Kunststoff, isoliert das Getriebe gegenüber dem Motor elektrisch und mechanisch, ist geräuscharm.

Die Fig. 6 zeigt die Ausgestaltung des U-förmigen Bügels 22, der das starre Chassis der Laubsägemaschine 10 bildet und endseitig die Blattfedern 50, 51 trägt, die als Schwingen des gemeinsam mit dem Laubsägeblatt gebildeten parallelogrammartigen Getriebes dienen.

Die Figur 7 zeigt in einer Vergrößerung das freie Ende 57 der unteren Blattfeder 51 mit dem Gabelschlitz 58, der Rinne 62, der Lasche 64, der Wölbung 66, der Öse 65 und dem Schlitz 660. Es ist erkennbar, daß der Nippel 34 des Laubsägeblatts 33 mit seiner Schneide 61 in der Rinne 62 pendelartig verschwenkbar gelagert ist, wobei das Laubsägeblatt 33 mit einem an die Schneide 61 anschließenden Vierkant 36 bzw. seiner Zahnreihe 32 den Gabelschlitz 58 durchtritt. Der Kunststoff-Nippel 34 wird im Gabelschlitz 58 dadurch spielfrei gelagert, daß er sich nach der Schneide 61 in Gestalt eines Vierkants 36 fortsetzt, der sich weit über die Schneide 61 hinaus erstreckt und das Sägeblatt 33 allseitig umgreift. Der Vierkant 36 dient auch der elektrischen Isolierung des Sägeblatts 33 gegenüber dem Motor bzw. dem Getriebe.

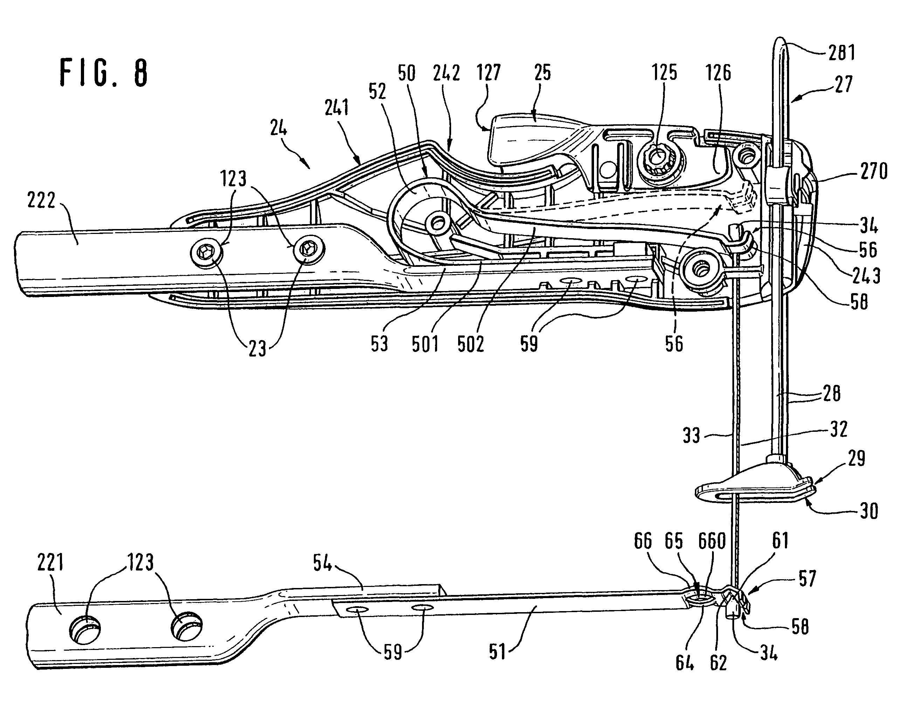

Fig. 8 verdeutlicht, daß der U-förmige Bügel 22 den Träger des parallelogrammartigen Getriebes und des Endgehäuses 24 sowie des Basisgehäuses 12 mit dem Antrieb bildet und zeigt den vorderen Bereich des unteren und oberen Arms 221, 222 des U-förmigen Bügels 22 ohne das Basisgehäuse 12. Dabei ist die linke Halbschale des Endgehäuses 24 und der Spannmechanismus zum Lösen bzw. Befestigen des Laubsägeblattes 33 erkennbar.

Der untere Arm 221 weist an seinem freien Ende eine waagerechte Abflachung 54 auf, an der eine ebene Blattfeder 51 an Befestigungspunkten 59 fixiert, insbesondere genietet, ist. Die Blattfeder 51 trägt an ihrem als Widerlager für das Sägeblatteinspannende dienden freien Ende 57 einen mittigen Gabelschlitz 58 zum Durchtritt des Sägeblatts 33 und zum Festhalten dessen Nippels 34.

Das freie Ende 57 der unteren Blattfeder 51 ist am äußersten Ende rechtwinklig nach unten - und daran anschließend nach hinten dachartig nach oben - abgewinkelt, so daß auf der Unterseite der dachartigen Abwinklung in Querrichtung eine Rinne 62 gebildet wird, in die sich das Laubsägeblatt 33 mit einer Schneide 61 des Nippels 34 gelenkartig pendelbar abstützt. Nach dem dachartigen Bereich setzt sich das freie Ende 57 der unteren Blattfeder 51 in einem kurzen, planebenen Bereich fort, an den sich eine nach oben gerichtete Wölbung 66 mit einem zentralen Längsschlitz 660 anschließt, der durch Stanzen bzw. Prägen einer nach unten gewölbten Lasche 64 gebildet wird. Die Wölbung 66 und die Lasche 64 bilden gemeinsam eine ovale Öse 65 zum Einhängen des Pleuls 67, das die Drehbewegung des Motors 11 in eine Auf- und Abbewegung der unteren Blattfeder 51 und damit des Laubsägeblatts 33 umwandelt.

Am oberen Arm 222 des Bügels 22 ist die linke Schale 241 des Endgehäuses 24 mittels Befestigungsschrauben 23 befestigt. Das freie Ende des oberen Arms 222 bildet wie das des unteren Arms 221 ebenfalls eine waagerechte Abflachung 53, an deren Oberseite an Befestigungspunkten 59 die obere Blattfeder 50 angenietet ist.
Die obere Blattfeder 50 erstreckt sich als nach rechts offenes U mit ihren Schenkeln 501, 502 nach außen - wie das freie Ende 53 des oberen Arms 222, wobei der untere, kurze Schenkel 501 am Arm 222 befestigt ist. Die Schenkel 501, 502 sind durch eine Wölbung 52 miteinander verbunden.

Das freie Ende 56 des oberen, längeren Schenkels 502 der Blattfeder 50 ist am freien Ende rechtwinklig nach oben abgewinkelt und daran anschließend V-förmig nach unten geformt - spiegelbildlich zum äußeren Ende 57 der unteren Blattfeder 51 - und bildet ebenfalls eine Rinne 62, die ebenso durch einen mittigen Gabelschlitz 58 über ihre Mitte hinaus durchtreten wird, so daß das Sägeblatt 33 mit seinem anderen Nippel 34 im Gabelschlitz 58 bzw. in der Rinne 62 des V-förmigen Bereichs gelenkig gelagert ist.

Die Arme 221, 222 tragen nahe ihren freien Enden Durchtrittslöcher 123, die quer zur durch den Bügel 22 aufgespannten Ebene verlaufen und dem Durchtritt der Befestigungsschrauben 23 zur Befestigung des Basis- bw. Endgehäuses 12, 24, insbesondere deren Halbschalen, dienen.

Dem oberen Schenkel 502 der oberen Blattfeder 50 ist ein als zweiarmiger Hebel ausgebildeter Spannhebel 25 zugeordnet, der um eine Schwenkachse 125 im Endgehäuse 24 mit seinem Griff 127 nach oben verschwenkbar ist, so daß sein Nocken 126 nach unten tritt und dabei den oberen Schenkel 502 der Blattfeder 50 zum unteren Arm 221 hin mitnimmt. Zum besseren Eingriff des Fingers des Bedienenden ist der Griff 127 des Spannhebels 25 ein nach hinten offener, rohrartiger Hohlkörper, in den der Bedienende mit einem Finger, geführt durch eine Vertiefung 242 in der äußeren Kontur des Endgehäuses 24, bequem eingreifen und nach oben verschwenken kann.

Am vorderen Bereich des Endgehäuses 24 ist der WerkstückNiederhalter 27 angeordnet. Dessen Gleitstangen 28 tragen unterhalb des Endgehäuses 24 den fußartigen Anschlag 30, der hufeisenförmig, mit einem zentralen Schlitz 29, ausgestaltet ist - zum seitlichen und hinteren Umgreifen des Sägeblatts 33.

Weiter ist die Drucktaste 270 erkennbar, durch deren Niederdrücken die Arretierung des Niederhalters 27 bzw. der Gleitstangen 28 - nach oben - aufhebbar ist. Dabei ist der Niederhalter 27 durch Auf- oder Abschieben des Bogens 281 mit der Hand des Bedienenden bequem einstellbar.

Der Spannhebel 25 befindet sich in seiner Spannposition, wobei er in die konkave Vertiefung 242 eintaucht und damit innerhalb der Außenkontur des Endgehäuses 24 verläuft.

Die obere Blattfeder 50 ist in der oberen Totpunktlage, d.h. in Spannposition, nur gestrichelt - und in der Löseposition zum Wechseln des Sägeblatts 33 in durchgehenden Linien - gezeichnet.

Die Dimensionierung der oberen Blattfeder 50 ist so gewählt, daß diese den Aufwärtshub (Leerhub) des parallelogrammartigen Getriebes bewirkt, nachdem über das nur zugbelastete Pleuel 67 das parallelogrammartige Getriebe, d.h. beide Blattfedern 50, 51 gemeinsam mit dem Laubsägeblatt 33 zum unteren Totpunkt hin - beim Arbeitshub - nach unten bewegt worden sind.

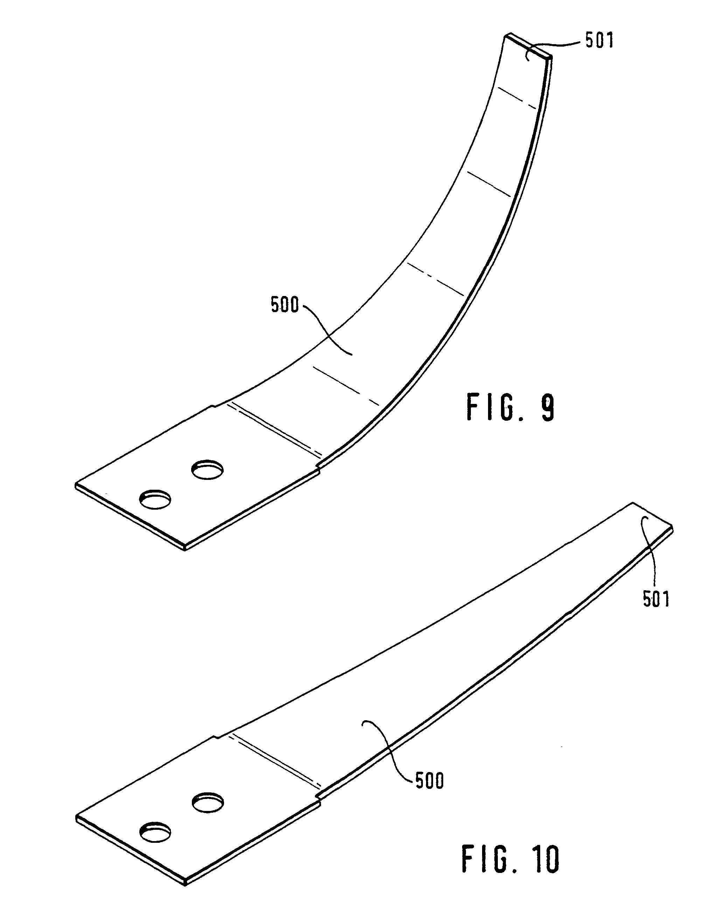

Figuren 9 und 10 zeigen als Variante zur oberen u-förmigen Blattfeder 50 eine eben trapezförmige Blattfeder 500, die die gleiche Federcharakteristik wie die Feder 50 hat, aber einfacher herstellbar ist und ein leichteres Vernieten mit dem oberen Arm 222 des Bügels 22 erlaubt.

Durch die Trapezform der Blattfeder 500 ist eine gleichmäßigere Biegespannungsverteilung bei der Auslenkung des Federendes beim Arbeitshub des Sägeblatts 33 gewährleistet als mit der u-förmigen Blattfeder 50.

In Figur 9 ist die Blattfeder 500 entspannt, mit dem äußeren Ende 501 im oberen Totpunkt des Arbeitshubes nach oben gewölbt, und in Figur 10 nach unten gebogen, d.h. gerade, im gespannten Zustand des unteren Totpunkts - vor dem Aufwärtshub des Sägeblattes 33 - gezeigt.

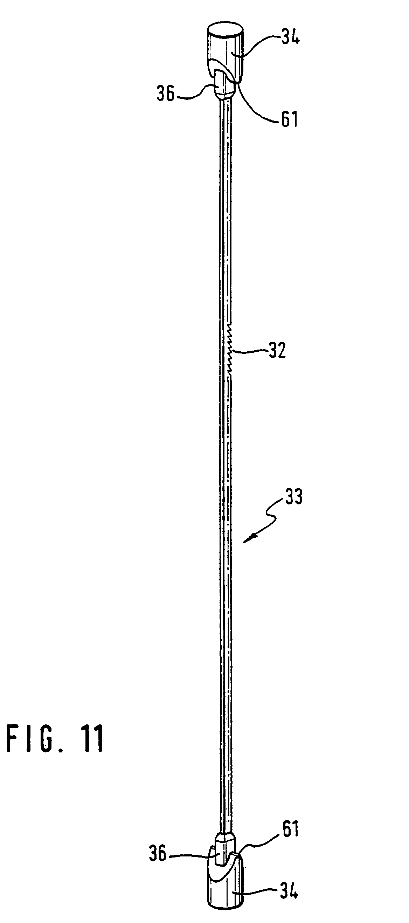

Figur 11 zeigt die Einzelheit des Laubsägeblatts 33 mit den als Nippel 34 ausgestalteten Einspannenden, deren Dachschrägen, Schneiden 61 und Vierkantbereiche 36.

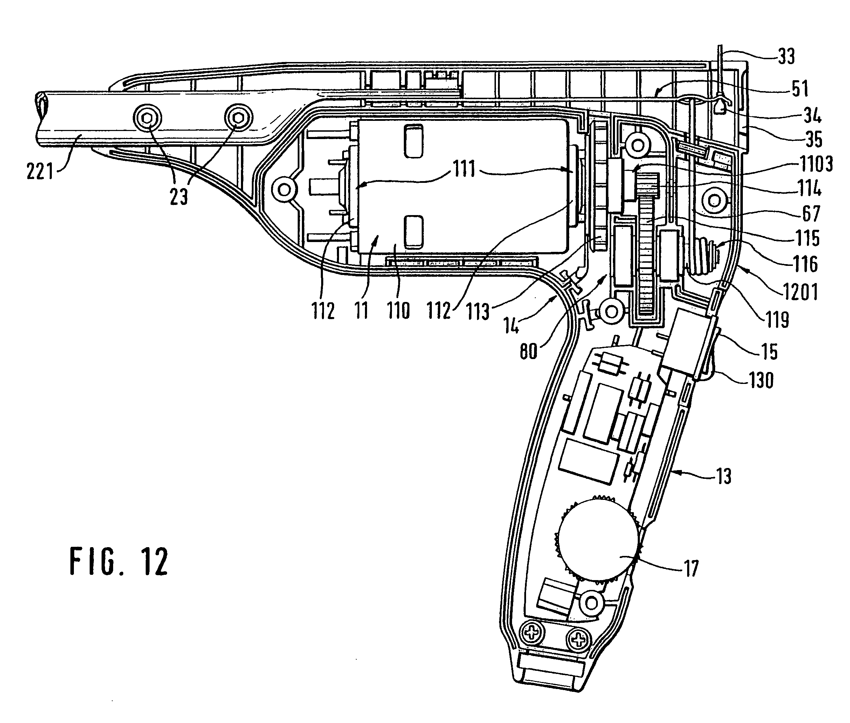

Fig. 12 zeigt die linke Halbschale 1202 des Basisgehäuses 12 mit montiertem Motor 11 und Getriebe 80, wobei das Motorgehäuse 110 über Gummiringe 112 elastische Lagerpunkte 111 bildet zur schwingungsgedämpften Aufnahme des Motors 11. Eine Motorwelle 1103 trägt einen Lüfter 113 und dazu axial benachbart ein Ritzel 114, das mit einem Gegegenritzel 115 kämmt. Das Gegegenritzel 115 sitzt drehfest auf einer Kurbelwelle 116, die am freien Ende einen Kurbelzapfen 119 zum Antrieb des Pleuls 67 trägt.

## Patentansprüche

1. Handgeführte Laubsägemaschine (10) mit einem Laubsägeblatt (33), das zwischen zwei im wesentlichen parallelen, vorzugsweise aus einem U-förmigen Bügel (22), insbesondere aus Rohr, gebildeten Armen (221, 222) an deren Enden lösbar gespannt ist und das über einen in die Laubsäge (10) integrierten Motor (11), insbesondere hin- und hergehend, antreibbar ist, wobei eine mit dem Motor (11) gekuppelte Kurbelwelle (116) über ein Pleuel (67) ein elastisches Widerlager (51, 57) zur, insbesondere lösbaren, Halterung des Laubsägeblatts (33) ergreift und wobei an einem der Arme (221, 222) ein abstehender Handgriff (13), insbesondere mit einer Schalttaste (15) eines Ein- und Ausschalters, angeordnet ist,
**dadurch gekennzeichnet,**
**daß** der untere Arm (221) den Motor (11) und Getriebemittel (114, 115, 116, 119, 67) zum Hin- und Herbewegen des Sägeblatts (33) - längs eingebaut in einem Basisgehäuse (12) - trägt, wobei das Pleuel (67) mit dem elastischen Widerlager (51, 57) gekoppelt ist.

2. Laubsäge nach Anspruch 1, **dadurch gekennzeichnet, daß** der Motor (11) ein Gleichstrommotor ist, der ein gesondertes Motorgehäuse (110) hat, das kapselartig einen Rotor mit Motorwelle (1103), deren Lager sowie einen aus Permanentmagneten bestehenden Stator aufnimmt und der, insbesondere über eine Gleichrichter-Elektronik, an eine Netzspannungsquelle anschließbar ist.

3. Laubsäge nach Anspruch 2, **dadurch gekennzeichnet, daß** der Motor (11) über Gummiringe (112) im Basisgehäuse (12) elastisch lagerbar ist.

4. Laubsäge nach Anspruch 1, **dadurch gekennzeichnet, daß** die Kurbelwelle (116) im Basisgehäuse (12) gelagert ist und an einem freien Ende einen Kurbelzapfen (119) trägt, der formschlüssig mit dem Pleul (67) kuppelbar ist.

5. Laubsäge nach Anspruch 1, **dadurch gekennzeichnet, daß** eine vom unteren Arm (221) getragene Blattfeder (51) mit ihrem freien Ende (57) als auf- und abschwenkbares Widerlager (57) des Sägeblatts (33) dient und dieses parallelogrammartig führt, wobei das mit der Blattfeder (51) gekoppelte Pleul (67) nur auf Zug beansprucht wird.

6. Laubsäge nach Anspruch 5, **dadurch gekennzeichnet, daß** das Pleul (67) am Kurbelzapfen (119) mit einem Pleulauge (680), insbesondere über ein Nadellager (1100), drehbar gelagert ist.

7. Laubsäge nach Anspruch 1, **dadurch gekennzeichnet, daß** der obere Arm (222) an seinem freien Ende, insbesondere in einem Endgehäuse (24), eine Blattfeder (50) trägt, die als oberes Widerlager (56) zum Festhalten des oberen Endes (34) des Laubsägeblatts (33) dient, wobei ein parallelogrammartiges Getriebe mit dem Sägeblatt (33) als Koppel und mit den Widerlagern (56, 57) als Schwingen gebildet wird.

8. Laubsäge nach Anspruch 7, **dadurch gekennzeichnet, daß** das Endgehäuse (24) Spannmittel (25) zum lösbaren Haltern des Sägeblatts (33) trägt.

9. Laubsäge nach Anspruch 7, **dadurch gekennzeichnet, daß** die obere Blattfeder (50) u-förmig gebogen ist und zwei Schenkel (501, 502) hat, von denen einer am freien Ende (53) des oberen Arms (222) befestigt ist, insbesondere genietet, wobei mindestens einer der Schenkel (501, 502) gleichsinnig mit dem Arm (222) nach außen weist.

10. Laubsäge nach Anspruch 5 und 7, **dadurch gekennzeichnet, daß** die als Widerlager dienenden Enden (56, 57) der Blattfedern (50, 51) einen, vorzugsweise mittigen, Schlitz (58) tragen, in den je ein Einspannende (34) des Laubsägeblatts (33) lösbar einhängbar ist, wobei das Laubsägeblatt (33) an den Gabelenden (56, 57) der Blattfedern (50, 51) parallelogrammartig auf und nieder führbar ist.

11. Laubsäge nach Anspruch 10, **dadurch gekennzeichnet, daß** die Blattfedern (50, 51) an ihren freien Enden je eine zum Schlitz (58) quer verlaufende Rinne (61) aufweisen, in die je ein als Nippel (34) ausgestaltetes Einspannende des Sägeblatts (33), insbesondere mit einer prismatischen Schneide (61) selbstzentrierend ein Schwenkgelenk bildend, abstützbar ist.

12. Laubsäge nach Anspruch 11, **dadurch gekennzeichnet, daß** die untere Blattfeder (51) an ihrem freien Ende (57) eine, insbesondere gestanzte, nach unten gewölbte Lasche (64) aufweist, die eine Öse (65) zum Eingriff des Pleuels (67), insbesondere mit eine als Haken (671) ausgestalteten Ende, bildet.

13. Laubsäge nach Anspruch 1, **dadurch gekennzeichnet, daß** das Basisgehäuse (12) pistolenartig ausgestaltet ist und einen unten schräg nach hinten austretenden Handgriff (13) aufweist, dessen hintere Kontur eine gekrümmt abgewinkelte Kehle (14) bildet, die sich in Bedienposition vertikal in die Hand des Bedienenden schmiegt und sich darin horizontal und vertikal einspannt, wobei der Bügel (22) mit dem unteren Arm (221) hinten aus dem Gehäuse (12) tritt, bogenförmig nach oben und nach vorn in den zweiten Arm (222) übergeht.

14. Laubsäge nach Anspruch 13, **dadurch gekennzeichnet, daß** sich das Basisgehäuse (12) an den Handgriff (13) anschließend nach hinten erstreckt und als Unterarmstütze dient.

15. Laubsäge nach Ansprüche 5 und 7, **dadurch gekennzeichnet, daß** das Laubsägeblatt (33) zwei Einspannenden besitzt, die sich mit Verdickungen, insbesondere in Gestalt von Nippeln (34), an den Widerlagern (56, 57) der Blattfedern (50, 51) in einem Gabelschlitz (58) festhalten.

## Claims

1. Hand-guided scroll saw (10) having a scroll saw blade (33) which is releasably clamped between two essentially parallel arms (221, 222), preferably formed from a U-shaped frame (22), in particular from a tube, at their ends and can be driven, in particular in a reciprocating manner, via a motor (11) integrated in the scroll saw (10), a crankshaft (116) coupled to the motor (11) seizing an elastic abutment (51, 57) via a connecting rod (67), the elastic abutment (51, 57) being intended for retaining the scroll saw blade (33), in particular in a releasable manner, and a projecting handle (13), in particular having a switch button (15) of an on/off switch, being arranged on one of the arms (221, 222), **characterized in that** the bottom arm (221) carries the motor (11) and transmission means (114, 115, 116, 119, 67) for the reciprocating movement of the saw blade (33), in such a way that said motor (11) and said transmission means (114, 115, 116, 119, 67) are fitted longitudinally in a base housing (12), the connecting rod (67) being coupled to the elastic abutment (51, 57).

2. Scroll saw according to Claim 1, **characterized in that** the motor (11) is a direct-current motor which has a separate motor housing (110) which, in an encapsulated manner, accommodates a rotor with motor shaft (1103), its bearings and a stator consisting of a permanent magnet and which can be connected to a mains voltage source, in particular via an electronic rectifier.

3. Scroll saw according to Claim 2, **characterized in that** the motor (11) can be elastically mounted in the base.housing (12) via rubber rings (112).

4. Scroll saw according to Claim 1, **characterized in that** the crankshaft (116) is mounted in the base housing (12) and carries a crank pin (119) at a free end, and this crank pin (119) can be coupled to the connecting rod (67) in a positive-locking manner.

5. Scroll saw according to Claim 1, **characterized in that**, with its free end, a leaf spring (51) carried by the bottom arm (221) serves as an abutment (57), which can be pivoted up and down, for the saw blade (33) and guides the latter in a parallelogram-like manner, the connecting rod (67) coupled to the leaf spring (51) only being stressed in tension.

6. Scroll saw according to Claim 5, **characterized in that** the connecting rod (67) is rotatably mounted on the crank pin (119) with a connecting-rod eye (680), in particular via a needle bearing (1100).

7. Scroll saw according to Claim 1, **characterized in that** the top arm (222), at its free end, in particular in an end housing (24), carries a leaf spring (50) which serves as a top abutment (56) for holding the top end (34) of the scroll saw blade (33) in place, a parallelogram-like mechanism being formed with the saw blade (33) as coupler and with the abutments (56, 57) as rockers.

8. Scroll saw according to Claim 7, **characterized in that** the end housing (24) carries clamping means (25) for releasably retaining the saw blade (33).

9. Scroll saw according to Claim 7, **characterized in that** the top leaf spring (50) is bent in a U shape and has two legs (501, 502), of which one is fastened, in particular riveted, to the free end (53) of the top arm (222), at least one of the legs (501, 502) pointing outwards in the same direction as the arm (222).

10. Scroll saw according to Claims 5 and 7, **characterized in that** the ends (56, 57), serving as abutments, of the leaf springs (50, 51) have a, preferably central, slot (58), in which a respective clamping end (34) of the scroll saw blade (33) can be releasably fitted, it being possible for the scroll saw blade (33) to be guided up and down on the fork ends (56, 57) of the leaf springs (50, 51) in a parallelogram-like manner.

11. Scroll saw according to Claim 10, **characterized in that**, at their free ends, the leaf springs (50, 51) have a respective channel (61) which runs transversely to the slot (58) and in which a respective clamping end, designed as nipple (34), of the saw blade (33) can be supported, in particular in such a way as to form a pivot joint with a prismatic knife edge (61) in a self-centring manner.

12. Scroll saw according to Claim 11, **characterized in that** the bottom leaf spring (51), at its free end (57), has an, in particular punched, strap (64) which is arched downwards and forms an eye (65) for the engagement of the connecting rod (67), in particular with an end designed as a hook (671).

13. Scroll saw according to Claim 1, **characterized in that** the base housing (12) is of pistol-like design and has a handle (13) which emerges at the bottom obliquely rearwards and whose rear contour forms a fillet (14) which is angled in a curved manner and which nestles vertically into the hand of the operator in the operating position and is clasped horizontally and vertically therein, the frame (22), with the bottom arm (221), emerging rearwards from the housing (12) and merging in a curved shape at the top and at the front into the second arm (222).

14. Scroll saw according to Claim 13, **characterized in that** the base housing (12) extends rearwards following the handle (13) and serves as a lower-arm support.

15. Scroll saw according to Claims 5 and 7, **characterized in that** the scroll saw blade (33) has two clamping ends which, with widened portions, in particular in the form of nipples (34), are held in place on the abutments (56, 57) of the leaf springs (50, 51) in a fork slot (58).

## Revendications

1. Scie sauteuse à découper à moteur, conduite à la main (10) comportant une lame de scie (33) tendue de manière amovible entre l'extrémité de deux bras (221, 222) essentiellement parallèles, formés de préférence par un étrier en U (22) notamment tubulaire, et entraînée par un moteur (11) intégré à la scie (10), suivant notamment un mouvement alternatif,
un vilebrequin (116) couplé au moteur (11) agissant par l'intermédiaire d'une bielle (67) et d'un appui élastique (51, 57) pour prendre notamment de manière amovible la fixation de la lame de scie (33),
**caractérisée en ce que**
le bras inférieur (221) porte le moteur (11) et les moyens de transmission (114, 115, 116, 119, 67) pour commander le mouvement alternatif de la lame de scie (33) longitudinalement installée dans un boîtier de base (12), la bielle (67) étant couplée à l'appui élastique (51, 57).

2. Scie sauteuse à découper selon la revendication 1,
**caractérisée en ce que**
le moteur (11) est un moteur à courant continu ayant un boîtier de moteur (110) particulier logeant en les encapsulant un rotor avec un arbre moteur (1103), ses paliers ainsi qu'un stator formé d'aimants permanents et relié à une source de tension de réseau notamment par un circuit électronique redresseur.

3. Scie sauteuse à découper selon la revendication 2,
**caractérisée en ce que**
le moteur (11) est monté élastiquement dans le boîtier de base (12) par l'intermédiaire de bagues élastiques (112).

4. Scie sauteuse à découper selon la revendication 1,
**caractérisée en ce que**
le vilebrequin (116) est monté dans le boîtier de base (12) et une extrémité libre porte un tourillon de vilebrequin (119) couplé à la bielle (67) par une liaison de forme.

5. Scie sauteuse à découper selon la revendication 1,
**caractérisée en ce qu'**
un ressort lame (51) porté par le bras inférieur (221) sert, par son extrémité libre (57), de palier d'appui (57) à la lame de scie (33) et peut basculer en montée et en descente en guidant la lame de scie à la manière d'un parallélogramme,
la bielle (67) couplée à la lame de scie (51) étant seulement sollicitée en traction.

6. Scie sauteuse à découper selon la revendication 5,
**caractérisée en ce que**
la bielle (67) est montée à rotation sur le maneton de vilebrequin (119) par un oeillet de bielle (680) notamment avec un palier à aiguille (1100).

7. Scie sauteuse à découper selon la revendication 1,
**caractérisée en ce que**
l'extrémité libre du bras supérieur (222) porte un ressort lame (50) notamment dans un boîtier d'extrémité (24), ce ressort servant d'appui supérieur (56) pour tenir l'extrémité supérieure (34) de la lame de scie (33), en formant une transmission de type parallélogramme dont la lame de scie (33) constitue la bielle et les paliers (56, 57) les manivelles.

8. Scie sauteuse à découper selon la revendication 7,
**caractérisée en ce que**
le boîtier d'extrémité (24) porte un tendeur (25) pour tenir la lame de scie (33) de manière amovible.

9. Scie sauteuse à découper selon la revendication 7,
**caractérisée en ce que**
le ressort lame supérieur (50) est recourbé en forme de U et comporte deux branches (501, 502) dont l'une est fixée à l'extrémité libre (53) du bras supérieur (222) en particulier par rivetage et au moins l'une des branches (501, 502) est tournée vers l'extérieur dans le même sens que le bras (222).

10. Scie sauteuse à découper selon les revendications 5 et 7,
**caractérisée en ce que**
les extrémités (56, 57) des ressorts lames (50, 51) servant d'appui ont une fente (58) de préférence centrale dans laquelle s'accroche de manière amovible l'extrémité d'accrochage (34) respective de la lame de scie à découper (33),
la lame de scie (33) étant guidée en montée et descente aux extrémités de fourche (56, 57) des ressorts lames (50, 51) à la manière d'un parallélogramme.

11. Scie sauteuse à découper à contourner selon la revendication 10,
**caractérisée en ce que**
les extrémités libres des ressorts lames (50, 51) ont chacune une gorge (61) transversale à la fente (58) et dans laquelle s'appuie chaque fois l'extrémité de serrage de la lame de scie (33) en forme de nipple (34) notamment par un couteau prismatique (61) assurant l'autocentrage et formant une articulation de basculement.

12. Scie sauteuse à découper selon la revendication 11,
**caractérisée en ce que**
le ressort lame inférieur (51) comporte à son extrémité libre (57) une patte cintrée vers le bas (64) notamment emboutie, formant un oeillet (65) pour la prise de la bielle (67) notamment avec une extrémité en forme de crochet (671).

13. Scie sauteuse à découper à contourner selon la revendication 1,
**caractérisée en ce que**
le boîtier de base (12) a la forme d'un pistolet avec une poignée (13) dirigée vers le bas et vers l'arrière dont le contour arrière a une gorge (14) cintrée qui s'adapte verticalement dans la main de l'utilisateur en position de fonctionnement et se fixe ainsi horizontalement et verticalement, l'étrier (22) sortant avec son bras inférieur (221) à l'arrière du boîtier (12) pour être cintré en arc vers le haut et rejoindre vers l'avant le second bras (222).

14. Scie sauteuse à découper selon la revendication 13,
**caractérisée en ce que**
le boîtier de base (12) s'étend vers l'arrière en faisant suite à la poignée (13) et sert d'appui pour l'avant bras.

15. Scie sauteuse à découper à contourner selon les revendications 5 et 7.
**caractérisée en ce que**
la lame de scie (33) comporte deux extrémités de serrage fixées avec des renforcements notamment sous la forme de nipples (34) aux appuis (56, 57) des ressorts lames (50, 51) dans une fente en forme de fourche (58).
